# EUROPÄISCHE PATENTSCHRIFT

(11) **EP 1 390 998 B1**
(45) Veröffentlichungstag und Bekanntmachung des Hinweises auf die Patenterteilung: **06.10.2004**
(21) Anmeldenummer: 01996898.1
(22) Anmeldetag: 13.11.2001
(51) Int. Cl.: H01M 8/02

(54) **VERFAHREN ZUR HERSTELLUNG EINER ELEKTROLYTMATRIX, INSBESONDERE FÜR EINE SCHMELZKARBONATBRENNSTOFFZELLE**
METHOD FOR THE PRODUCTION OF AN ELECTROLYTE MATRIX, ESPECIALLY FOR A MOLTEN CARBONATE FUEL CELL
PROCEDE DE FABRICATION D'UNE MATRICE ELECTROLYTIQUE, DESTINEE NOTAMMENT A UNE PILE A COMBUSTIBLE A CARBONATE FONDU

(30) Priorität: 15.11.2000 DE 10056538; 02.12.2000 DE 10060052
(43) Veröffentlichungstag der Anmeldung: 25.02.2004
(73) Patentinhaber: MTU CFC Solutions GmbH, 85521 Ottobrunn (DE)
(72) Erfinder: FRIEDRICH, Mike, 84427 St. Wolfgang (DE)
(74) Vertreter: Winter, Josef
(86) Internationale Anmeldenummer: PCT/EP2001/013092
(87) Internationale Veröffentlichungsnummer: WO 2002/041423

(56) Entgegenhaltungen:
- DE-A- 4 030 945
- DE-A- 19 935 271
- US-A- 4 079 171
- US-A- 4 581 302
- US-A- 5 453 101
- US-A- 5 580 673
- US-A- 5 997 794

## Beschreibung

Die Erfindung betrifft ein Verfahren zur Herstellung einer Elektrolytmatrix.

Zur Erzeugung von elektrischer Energie mittels Brennstoffzellen sind üblicherweise eine größere Anzahl von Brennstoffzellen in einem Brennstoffzellenstapel angeordnet, die jeweils eine Anode, eine Kathode und eine dazwischen angeordnete Elektrolytmatrix aufweisen. Die einzelnen Brennstoffzellen sind jeweils durch Biopolarplatten voneinander getrennt und elektrisch kontaktiert, und an den Anoden und den Kathoden sind jeweils Stromkollektoren zum elektrischen Kontaktieren derselben vorgesehen, und um jeweils das Brenngas bzw. das Kathodengas an diesen Elektroden vorbeizuführen. Im Randbereich von Anode, Kathode und Elektrolytmatrix sind jeweils Dichtungselemente vorgesehen, welche eine seitliche Abdichtung der Brennstoffzellen und damit des Brennstoffzellenstapels gegen ein Austreten von Anoden- und Kathodenmaterial bzw. Elektrolytmaterial der Matrix bilden. Der in der porösen Matrix fixierte Schmeizetektrolyt besteht typischerweise aus binären Alkalikarbonatschmelzen Li2CO3/K2CO3 oder Li2CO3/Na2CO3 oder aus ternären Schmelzen Li2CO3/Na2CO3/ K2C03. Im Betrieb erreichen Schmelzkarbonatbrennstoffzellen typischerweise Arbeitstemperaturen von 600°C bis 650°C.

Beim Betrieb von Schmelzkarbonatbrennstoffzellen besteht eine Schwierigkeit darin, dass der Unterschied zwischen den thermischen Ausdehnungskoeffizienten der Elektrolytmatrix und der diese umgebenden metallischen Komponenten der Brennstoffzelle, insbesondere der seitlichen Abdichtungselemente, zu thermisch induzierten Zugspannungen führt, welche insbesondere beim Anfahren der Brennstoffzellen eine Rissbildung in der Matrix nach sich ziehen. Dadurch können die gewünschte Leistung und Lebensdauer der Brennstoffzellen nicht erreicht werden.

Bekannte Brennstoffzellen dieser Art sind beispielsweise bekannt aus US 5,997,794 A, US 5,869,203 A, US 6,037,076 A, und aus der DE 40 30 945 A1. Beispielsweise bei der US 5,869,203 A wird zur Erhöhung der Festigkeit der Elektrolytmatrix zu Alpha-Lithiumaluminat kristallines Aluminium und Lithiumkarbonat zugesetzt, woraus beim Anfahren der Brennstoffzellen Aluminiumoxid und später Lithiumaluminat entsteht Dies führt zu einer Erhöhung der Festigkeit der Elektrolytmatrix, die mit einer geringfügigen Längenzunahme derselben verbunden ist, löst jedoch noch nicht das vorstehend beschriebene Problem.

Die Aufgabe der Erfindung ist ein Verfahren zur Herstellung einer Elektrolytmatrix, insbesondere für eine Schmelzkarbonatbrennstoffzelle anzugeben, bei welcher eine Rissbildung der Matrix auf Grund unterschiedlicher thermischer Ausdehnungskoeffizienten von Matrix und diese umgebenden metallischen Komponenten ausgeschlossen wird.

Durch die Erfindung wird ein Verfahren zur Herstellung einer Elektrolytmatrix geschaffen. Erfindungsgemäß ist es vorgesehen, dass die Elektrolytmatrix aus einem Matrixmaterial, enthaltend eine oder mehrere Lithiumverbindungen, Aluminiumoxid und Zirkoncarbid, hergestellt wird.

Das Matrixmaterial erleidet beim Anfahren der Brennstoffzelle eine Volumenzunahme. Eine Elektrolytmatrix mit dieser Eigenschaft kann mit Vorteil bei Schmelzkarbonatbrennstoffzellen und auch bei anderen Brennstoffzellenarten eingesetzt werden.

Ein Vorteil des erfindungsgemäßen Herstellungsverfahrens ist es, dass durch die Volumenzunahme beim Anfahren der Brennstoffzelle unterschiedliche thermische Ausdehnungskoeffizienten zwischen metallischen Komponenten der Brennstoffzelle und der Elektrolytmatrix ausgeglichen und damit das Entstehen von Rissen in der Matrix verhindert werden. Ein weiterer Vorteil besteht darin, dass durch die Volumenzunahme der Elektrolytmatrix eine Erhöhung des Anpressdrucks zwischen der Elektrolytmatrix und den Elektroden sowie deren Stromkollektoren stattfindet, was zu einer besseren Kontaktierung und damit einer höheren Leistung in der Zelle führt.

Vorzugsweise wird bei dem Verfahren Lithiumacetat und/oder Lithiumkarbonat und/oder Lithiumaluminat als Matrixmaterial verwendet.

Gemäß einer bevorzugten Weiterbildung des erfindungsgemäßen Verfahrens ist es vorgesehen, dass das Matrixmaterial aus einem Pulsationsreaktor stammendes Lithiumaluminat enthält.

Vorteilhafterweise ist es vorgesehen, dass das bei dem Verfahren verwendete Matrixmaterial weiterhin nanoskaliges Sekundärkom enthält.

Dieses nanoskaliges Sekundärkom ist vorzugsweise eines oder mehrere von Zr02, Si02, Al2O3, oder TiO2.

Gemäß einer bevorzugten Ausführungsform des erfindungsgemäßen Verfahrens wird die Elektrolytmatrix "grün" in die Schmelzkarbonatbrennstoffzelle eingebaut und bildet beim Anfahren der Brennstoffzelle ein Aluminat, insbesondere Lithiumaluminat, ein Oxid, insbesondere Zirkondioxid und/oder ein Zirkonat, insbesondere Lithiumzirkonat.

Vorzugsweise erfolgt die Umwandlung zum Lithiumaluminat über Lithiumkarbonat, das sich bei höherer Temperatur zu Lithiumoxid zersetzt.

Weiterhin erfolgt vorzugsweise die Umwandlung von Zirkoncarbid zu Zirkondioxid und dann mit Lithiumacetat zu Lithiumzirkonat.

Vorzugsweise synthetisiert das Matrixmaterial beim Brand während der Erstinbetriebnahme der Brennstoffzelle unter Volumenzunahme.

Weiterhin von Vorteil ist es, wenn die Volumenzunahme des Matrixmaterials beim Anfahren der Brennstoffzelle im wesentlichen der thermischen Ausdehnung von mit der Elektrolytmatrix verbundenen Brennstoffzellenkomponenten entspricht oder größer als diese ist.

Vorzugsweise weist die Elektrolytmatrix nach dem Anfahren der Brennstoffzelle eine offene Porosität von 30 bis 70%, vorzugsweise von 40 bis 60% auf.

Weiterhin von Vorteil ist es, wenn die Elektrolytmatrix nach dem Anfahren der Brennstoffzelle einen mittleren Porendurchmesser von weniger als 0,4µm, vorzugsweise von weniger als 0,2µm aufweist.

Gemäß einer Alternative des erfindungsgemäßen Verfahrens wird die Elektrolytmatrix als einlagige Matrix hergestellt.

Gemäß einer anderen, vorteilhaften Alternative des Verfahrens wird die Elektrolytmatrix als mehrlagige Matrix hergestellt.

In besonders vorteilhafter Weise wird die erfindungsgemäße Elektrolytmatrix als mehrlagige Matrix mit mehreren gleichartigen Lagen hergestellt.

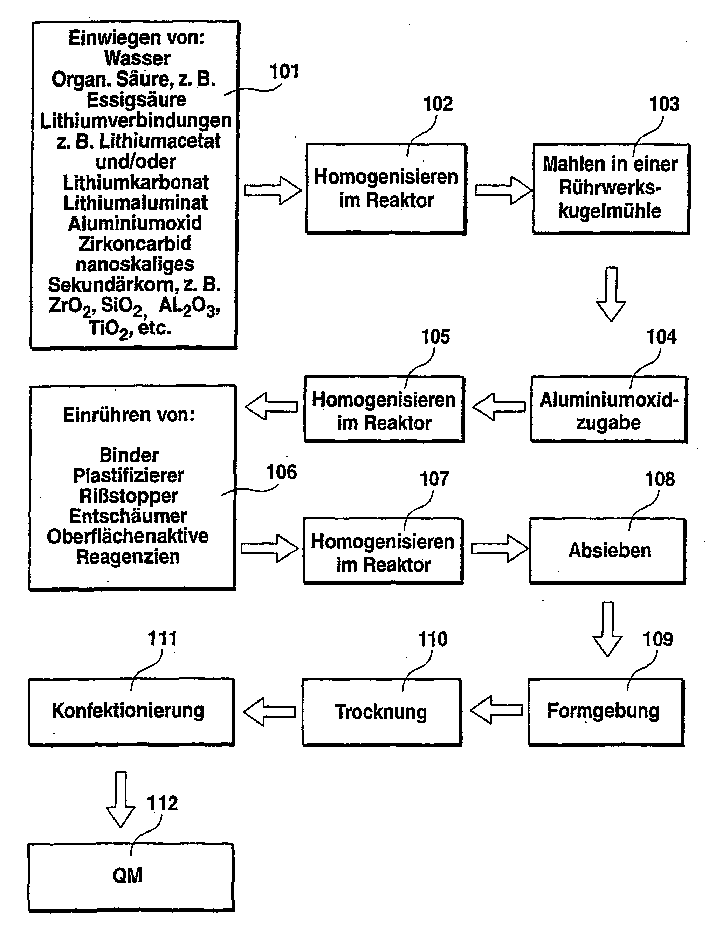

Im folgenden wird ein Ausführungsbeispiel der Erfindung anhand der Zeichnung erläutert.

Die Figur zeigt ein Flussdiagramm der Herstellung einer Elektrolytmatrix gemäß einem Ausführungsbeispiel der Erfindung.

Bei dem in der Figur anhand eines Flussdiagramms dargestellten Verfahren zur Herstellung einer Elektrolytmatrix für eine Schmelzkarbonatbrennstoffzelle erfolgt zunächst in einem Verfahrensschritt 101 ein Einwiegen der wesentlichen Bestandteile des Matrixmaterials. Dies sind eine oder mehrere Lithiumverbindungen, z. B. Lithiumacetat und/oder Lithiumkarbonat, und/oder Lithiumaluminat, sowie Aluminiumoxid und eine oder mehrere Zirkonverbindungen, wie Zirkoncarbid, vorzugsweise unter Verwendung von Wasser und einer organischen Säure, z. B. Essigsäure. Die Verwendung von Wasser als Dispersionsund Lösungsmittel ist überraschenderweise in Verbindung mit diesen Materialien möglich, was einen beträchtlichen kostenmäßigen Vorteil darstellt. Weiterhin wird ein nanoskaliges Sekundärkorn z. B. Zr02, Si02, Al2O3, Ti02 etc. zugegeben. In einem folgenden Verfahrensschritt 102 erfolgt ein Homogenisieren der Mischung im Reaktor. Danach wird in Schritt 103 die Mischung in einer Rührwerkskugelmühle gemahlen. Nach einer weiteren Zugabe von Aluminiumoxid in einem Schritt 104 erfolgt ein weiteres Homogenisieren der Mischung im Reaktor, Verfahrensschritt 105.

In die solchermaßen zusammengesetzte, gemahlene und homogenisierte Mischung werden im Verfahrensschritt 106 Zusatz- und Hilfsstoffe eingerührt, um dem Matrixmaterial die notwendigen mechanischen und Verarbeitungseigenschaften zu verleihen. Dies können sein: ein Bindemittel, ein Plastifizierungsmittel, ein Rissstopper, ein Entschäumer, und/oder oberflächenaktive Reagenzien. Nach dem Zuführen dieser Hilfsstoffe erfolgt wiederum ein Homogenisieren im Reaktor, Verfahrensschritt 107, worauf die Mischung abgesiebt wird, Verfahrensschritt 108.

Das nun roh fertiggestellte Matrixmaterial zur Herstellung der Elektrolytmatrix wird nun in Verfahrensschritten 109, 110 und 111 geformt, getrocknet und konfektioniert und schließlich qualitätskontrolliert, Verfahrensschritt 112.

Das Ergebnis ist eine Elektrolytmatrix für eine Schmelzkarbonatbrennstoffzelle, die aus einem Matrixmaterial besteht, welches beim Anfahren der Brennstoffzelle eine Volumenzunahme erfährt, kostengünstig in der Herstellung ist, eine hohe Leistung der Brennstoffzelle gewährleistet und eine hohe Brennstoffzellenlebensdauer ermöglicht. Die Kosten des Matrixmaterials und damit die Brennstoffzellenkosten sind deutlich reduziert. Es wird ein niedriger ohmscher Widerstand und eine hohe offene Porosität erzielt.

## Patentansprüche

1. Verfahren zur Herstellung einer Elektrolytmatrix, insbesondere für eine Schmelzkarbonatbrennstoffzelle, wobei die Elektrolytmatrix aus einem Matrixmaterial, enthaltend eine oder mehrere Lithiumverbindungen und Aluminiumoxid hergestellt wird, **dadurch gekennzeichnet, dass** das Matrixmaterial Zirkoncarbid enthält.

2. Verfahren nach Anspruch 1, **dadurch gekennzeichnet, dass** das Matrixmaterial Lithiumacetat und/oder Lithiumkarbonat und/oder Lithiumaluminat enthält.

3. Verfahren nach Anspruch 1 oder 2, **dadurch gekennzeichnet, dass** das Matrixmaterial aus einem Pulsationsreaktor stammendes Lithiumaluminat enthält

4. Verfahren nach einem der Ansprüche 1 bis 3, **dadurch gekennzeichnet, dass** das Matrixmaterial nanoskaliges Sekundärkorn enthält.

5. Verfahren nach einem der Ansprüche 1 bis 4, **dadurch gekennzeichnet, dass** das Matrixmaterial als nanoskaliges Sekundärkorn eines oder mehrere von ZrO2, SiO2, Al2O3, TiO2 enthält.

6. Verfahren nach einem der Ansprüche 1 bis 5, **dadurch gekennzeichnet, dass** bei der Herstellung als Dispersions- und Lösemittel ausschließlich oder nicht ausschließlich Wasser eingesetzt wird.

7. Verfahren nach einem der Ansprüche 1 bis 6, **dadurch gekennzeichnet, dass** die Elektrolytmatrix "grün" in die Schmelzkarbonatbrennstoffzelle eingebaut wird und beim Brand während der Erstinbetriebnahme der Brennstoffzelle ein Aluminat, insbesondere Lithiumaluminat, ein Oxid, insbesondere Zirkondioxid und/oder ein Zirkonat, insbesondere Lithiumzirkonat bildet.

8. Verfahren nach Anspruch 7, **dadurch gekennzeichnet, dass** die Umwandlung zum Lithiumaluminat über Lithiumkarbonat erfolgt, das sich bei höherer Temperatur zu Lithiumoxid zersetzt.

9. Verfahren nach Anspruch 7 oder 8, **dadurch gekennzeichnet, dass** die Umwandlung von Zirkoncarbid zu Zirkondioxid und dann mit Lithiumacetat zu Lithiumzirkonat erfolgt.

10. Verfahren nach einem der Ansprüche 1 bis 9, **dadurch gekennzeichnet, dass** das Matrixmaterial beim Anfahren der Brennstoffzelle unter Volumenzunahme synthetisiert.

11. Verfahren nach Anspruch 10, **dadurch gekennzeichnet, dass** die Volumenzunahme des Matrixmaterials beim Anfahren der Brennstoffzelle im wesentlichen der thermischen Ausdehnung von mit der Elektrolytmatrix verbundenen Brennstoffzellenkomponenten entspricht oder größer als diese ist.

12. Verfahren nach einem der Ansprüche 1 bis 11, **dadurch gekennzeichnet, dass** die Elektrolytmatrix nach dem Anfahren der Brennstoffzelle eine offene Porosität von 30 bis 70%, vorzugsweise von 40 bis 60% aufweist.

13. Verfahren nach einem der Ansprüche 1 bis 12, **dadurch gekennzeichnet, dass** die Elektrolytmatrix nach dem Anfahren der Brennstoffzelle einen mittleren Porendurchmesser von weniger als 0,4µm, vorzugsweise von weniger als 0,2µm aufweist.

14. Verfahren nach einem der Ansprüche 1 bis 13, **dadurch gekennzeichnet, dass** die Elektrolytmatrix als einlagige Matrix hergestellt wird.

15. Verfahren nach einem der Ansprüche 1 bis 13, **dadurch gekennzeichnet, dass** die Elektrolytmatrix als mehrlagige Matrix hergestellt wird.

16. Verfahren nach Anspruch 15, **dadurch gekennzeichnet, dass** die Elektrolytmatrix als mehrlagige Matrix mit mehreren gleichartigen Lagen hergestellt wird.

## Claims

1. Process for producing an electrolyte matrix, in particular for a molten carbonate fuel cell, the electrolyte matrix being produced from a matrix material containing one or more lithium compounds and aluminium oxide, **characterized in that** the matrix material contains zirconium carbide.

2. Process according to Claim 1, **characterized in that** the matrix material contains lithium acetate and/or lithium carbonate and/or lithium aluminate.

3. Process according to Claim 1 or 2, **characterized in that** the matrix material contains lithium aluminate from a pulsed reactor.

4. Process according to one of Claims 1 to 3, **characterized in that** the matrix material contains nanoscale secondary grain.

5. Process according to one of Claims 1 to 4, **characterized in that** as nanoscale secondary grain the matrix material contains one or more of ZrO₂, SiO₂, Al₂O₃, TiO₂.

6. Process according to one of Claims 1 to 5, **characterized in that** the dispersant and solvent used during production is exclusively or non-exclusively water.

7. Process according to one of Claims 1 to 6, **characterized in that** the electrolyte matrix is introduced into the molten carbonate fuel cell in a "green" state, and forms an aluminate, in particular lithium aluminate, an oxide, in particular zirconium dioxide, and/or a zirconate, in particular lithium zirconate, as it is fired during initial operation of the fuel cell.

8. Process according to Claim 7, **characterized in that** the conversion into the lithium aluminate takes place via lithium carbonate, which decomposes at higher temperature to form lithium oxide.

9. Process according to Claim 7 or 8, **characterized in that** the conversion takes place from zirconium carbide to zirconium dioxide and then, with lithium acetate, to lithium zirconate.

10. Process according to one of Claims 1 to 9, **characterized in that** the matrix material is synthesized, with an increase in volume, when the fuel cell is being started up.

11. Process according to Claim 10, **characterized in that** the increase in the volume of the matrix material when the fuel cell is being started up substantially corresponds to or is greater than the thermal expansion of fuel cell components connected to the electrolyte matrix.

12. Process according to one of Claims 1 to 11, **characterized in that** the electrolyte matrix, after the fuel cell has been started up, has an open porosity of from 30 to 70%, preferably from 40 to 60%.

13. Process according to one of Claims 1 to 12, **characterized in that** the electrolyte matrix, after the fuel cell has been started up, has a mean pore diameter of less than 0.4 µm, preferably of less than 0.2 µm.

14. Process according to one of Claims 1 to 13, **characterized in that** the electrolyte matrix is produced as a single-layer matrix.

15. Process according to one of Claims 1 to 13, **characterized in that** the electrolyte matrix is produced as a multilayer matrix.

16. Process according to Claim 15, **characterized in that** the electrolyte matrix is produced as a multilayer matrix having a plurality of layers of the same type.

## Revendications

1. Procédé pour la fabrication d'une matrice électrolytique, notamment pour une pile à combustible à carbonate fondu dans lequel la matrice électrolytique est fabriquée en matériau matriciel contenant un ou plusieurs composé(s) lithium et un oxyde d'aluminium, **caractérisé en ce que** le matériau matriciel contient du carbure de zirconium.

2. Procédé selon la revendication 1, **caractérisé en ce que** le matériau matriciel contient de l'acétate de lithium et/ou du carbonate de lithium et/ou de l'aluminate de lithium.

3. Procédé selon la revendication 1 ou 2, **caractérisé en ce que** le matériau matriciel contient un aluminate de lithium provenant d'un réacteur pulsé.

4. Procédé selon l'une quelconque des revendications 1 à 3, **caractérisé en ce que** le matériau matriciel contient une particule secondaire de l'ordre de grandeur du nanomètre.

5. Procédé selon l'une quelconque des revendications 1 à 4, **caractérisé en ce que** le matériau matriciel contient, comme particule secondaire de l'ordre de grandeur du nanomètre, une ou plusieurs particule(s) parmi ZrO2, SiO2, Al2O3, TiO2.

6. Procédé selon l'une quelconque des revendications 1 à 5, **caractérisé en ce que** lors de la fabrication on utilise comme solvant ou solution de dispersion de l'eau de façon exclusive ou non exclusive.

7. Procédé selon l'une quelconque des revendications 1 à 6, **caractérisé en ce que** la matrice électrolytique « verte » est intégrée dans la pile à combustible à carbonate fondu et que lors de la combustion au cours de la première mise en service de la pile à combustible un aluminate, notamment un aluminate de lithium, un oxyde, notamment un dioxyde de zirconium et/ou un zirconate, notamment un zirconate de lithium se forment.

8. Procédé selon la revendication 7, **caractérisé en ce que** la conversion en aluminate de lithium est réalisée par l'intermédiaire du carbonate de lithium qui se décompose à une température plus élevée en oxyde de lithium.

9. Procédé selon la revendication 7 ou 8, **caractérisé en ce que** l'on réalise la conversion du carbure de zirconium en dioxyde de zirconium et ensuite avec l'acétate de lithium en zirconate de lithium.

10. Procédé selon l'une quelconque des revendications 1 à 9, **caractérisé en ce que** le matériau matriciel se synthétise lors du démarrage de la pile à combustible sous l'augmentation du volume.

11. Procédé selon la revendication 10, **caractérisé en ce que** l'augmentation du volume du matériau matriciel lors du démarrage de la pile à combustible correspond principalement à l'expansion thermique des composants de la pile à combustible reliés à la matrice électrolytique ou est supérieure à celle-ci.

12. Procédé selon l'une quelconque des revendications 1 à 11, **caractérisé en ce que** la matrice électrolytique après le démarrage de la pile à combustible présente une porosité ouverte de 30 à 70 %, de préférence de 40 à 60 %.

13. Procédé selon l'une quelconque des revendications 1 à 12, **caractérisé en ce que** la matrice électrolytique après le démarrage de la pile à combustible présente un diamètre de pore intermédiaire inférieur à 0,4 µm, de préférence inférieur à 0,2 µm.

14. Procédé selon l'une quelconque des revendications 1 à 13, **caractérisé en ce que** la matrice électrolytique est fabriquée comme une matrice monocouche.

15. Procédé selon l'une quelconque des revendications 1 à 13, **caractérisé en ce que** la matrice électrolytique est fabriquée comme une matrice multicouche.

16. Procédé selon la revendication 15, **caractérisé en ce que** la matrice électrolytique est fabriquée comme une matrice multicouche avec plusieurs couches de même type.
